# EUROPEAN PATENT SPECIFICATION

(11) **EP 1 267 523 B1**
(45) Date of publication and mention of the grant of the patent: **01.01.2020**
(21) Application number: 01114336.9
(22) Date of filing: 13.06.2001
(51) Int. Cl.: H04L 12/28, H04M 1/60

(54) **Extended user interface in a wireless headset**
Erweiterte Benutzerschnittstelle in einem drahtlosen Kopfhörer
Interface utilisateur étendue dans un casque d'écoute sans fil

(43) Date of publication of application: 18.12.2002
(73) Proprietor: Sony Deutschland GmbH, 10785 Berlin (DE)
(72) Inventor: Löbbert, Johannes, c/o Advanced Techn. Cent. Stuttgart, 70327 Stuttgart (DE)
(74) Representative: Witte, Weller & Partner Patentanwälte mbB

(56) References cited:
- EP-A- 1 100 243
- WO-A-01/19054
- WO-A-01/37262
- WO-A-01/37524
- WO-A-02/05593
- WO-A-02/09345
- WO-A1-00/51293
- US-A- 6 006 115

## Description

The present invention relates to the field of mobile computing, wireless communication, and mobile multimedia. In particular, it relates to a selective use of a multifunctional headphone or headset for different kind of audio sources.

Most media sources providing audio data like i.e. mobile phones, mobile computing devices, portable CD or MD players, radios, TV-sets or any combinations thereof can be controlled by control elements on the device itself and/or by a small control unit positioned in the cable connection between the headset and the device or an extra remote control unit. The small control unit is usually placed in a short distance from the headphone providing an easy access to the control element when using the device. But in general, cable connections cause some inconvenience to user by bearing a potential danger of getting tangled up with anything present between the signal source and the headset. When connected to a stationary multimedia device, a cable connection further limits the freedom of movement for a user. A number of cable connections will therefore be replaced by wireless technologies like e.g. Bluetooth, a de facto standard for short range radio links between mobile and stationary computing devices, mobile phones and any other portable devices.

Typical current wireless headsets are operable at two different transmission frequencies, allowing a data transmission from a base station connected by cable to a multimedia device like i.e. a TV-set or a radio or the like to the headset. The transmission frequency can be changed to avoid interference with a neighboring wireless headset of a similar kind, but then the frequency channel has to be changed both on the base station as well as on the headset. The communication between the devices is only unidirectional from the base station to the headset.

A different type of headphone described in the European Patent Application EP 1 052 834 A2 provides control elements for controlling certain functions of a radio set like e. g. the sound volume. The bi-directional short range radio link is used for an audio data transmission from the radio set to the headset while the headset transmits control data to the radio set, thereby acting as a remote control for controlling functions of the radio set. Although, the radio set is described to communicate with several other mobile devices external to it, the headset itself is committed to an exclusive communication with the radio set.

JP 8 009 474 proposes to provide a headphone with operating keys and to transmit infrared signals to a TV receiver to remotely control its operation.

The prior art allows a user to keep the media source providing the desired audio signals apart from the headphone or headset. When skiing or biking e.g. the media source, like i.e. a CD-player or a MD-player may be safely stored within a backpack and a user with a wireless headphone will not be at risk of getting tangled in the cables. But for a further device, like e.g. for a mobile telephone, which the user might also keep in the backpack, a second headset will have to be used. Further, when a user wants to share music with a partner, the partner has to use a headphone adapted to the special media source of the user.

WO0119054 discloses a headset that can be used to listen to music or other audio programming and can also be used to conduct a telephone conversation. A microphone on a biased arm pivots between an extended position and a retracted position so as to be in place for conducting a telephone call, but out of the way when not in use. Extension of the microphone arm may signal the acceptance of an incoming call or may initiate a call being placed by the user.

US6006115 discloses a pair of wireless headphones for receiving radio frequency transmissions from a sound system. The headphones may also incorporate a microphone so that the user can receive a phone call with the headphones. If a switch is actuated to activate the microphone, a telephone call is conducted.

WO0209345 discloses a method for accessing radiofrequency networks known as Bluetooth. It is proposed to initialise on a mobile phone an automatic identification procedure consisting essentially in placing a mobile phone and a headset in immediate proximity and in transmitting very short range signals to be exclusively received by a headset. Then it consists in initialising a standard connection procedure and if it is successful, an identification key is generated which is used for subsequent exchanges in normal operating conditions.

EP1100243 discloses a portable electro-acoustic transducer set that can connect to a telephone set and a cd player for outputting audio originating from these devices.

WO0205593 discloses a portable electro-acoustic transducer set that can connect to a plurality of hi-fi signal sources for outputting audio originating from these sources.

WO0051293 discloses the establishment of a wireless connection between two communication devices.A registration/authorisation data must be exchanged between the devices before the devices can be connected to each other. This information exchange is initiated by bringing the devices in such physical proximity to each other that a signal transmitted from at least one of the devices is received by the other device at a power level which exceeds a threshold level.

It is therefore an object of the present invention to provide a wireless transmission system for audio data allowing a user to link his headphone or his headset to any media source in his vicinity.

This object is achieved by the portable electro-acoustic transducer set of claim 1.

Further advantageous features are claimed in the respective sub claims.

Further, each media source advantageously transmits control data identifying its type and its address to the portable electro-acoustic transducer set in response to the above-mentioned broadcasting of control data. Thus, the portable electro-acoustic transducer set is enabled to gather identifying information with combined address information of all media sources available within its range. Preferably, each media source provides audio data in form of an audio message containing a voice sample characterizing the type of the media source, such providing a spoken-like identification which can be listened to by a user. The audio message may further be transmitted to the portable electro-acoustic transducer set following a request from the portable electro-acoustic transducer set, so that the audio message will only be submitted when requested. According to an advantageous development, the transmission of control and audio data is implemented according to the Bluetooth standard, which provides a method for short range radio links with a coverage of typically ten meter. The transmission power of typically 1 mW is held sufficiently low, to avoid interference with parasitic devices. With Bluetooth technology data rates up to 1 Mbit per second can be implemented. The low power consumption of the Blutooth chip is ideal for battery powered devices like the electro-acoustic transducer set according to the present invention.

Further, the input means advantageously comprises a speech recognition system for processing voice commands, providing voice activity detection for the control of the operations of the portable electro-acoustic transducer set.

Preferably, the media source processes commands received from the portable electro-acoustic transducer set in form of control data specifying certain operations of the media source, hereby allowing a remote control of operations provided by the media source.

A wireless transmission system for audio data according to the present invention may e.g. be implemented among others in a multimedia environment using mobile ad-hoc networks linking fixed and mobile devices, like e. g. stationary computing devices, hand-held computers, mobile phones and presentation screens or the like. In such a multimedia environment a user selects all the resources and services necessary for his current purpose. For a multimedia conference call a user will e.g. select a big display screen to visualize the other participants in a conference call or their presentations, a computing device to present his own presentations within the call, a mobile or fixed network phone for the telecommunication connection and an electro-acoustic transducer set according to the present invention to connect to the audio channel of the established multimedia call. After terminating the call, the user might then switch to another media source like e.g. a TV or radio set for keeping track of stock exchange quotations.

The described and further features, aspects, and advantages of the system according to the present invention will become better understood with regard to the following description, appended claims and the accompanying drawings, in which
Fig. 1 shows schematically a wireless transmission system for audio data according to the present invention comprising a portable electro-acoustic transducer set and a media source,
Fig. 2 shows in the flow diagram a simplified flow of processing steps for selectively connecting to a media source,
Fig. 3 shows an example of a mechanic input device for use as a control element according to an example not forming part of the present invention.

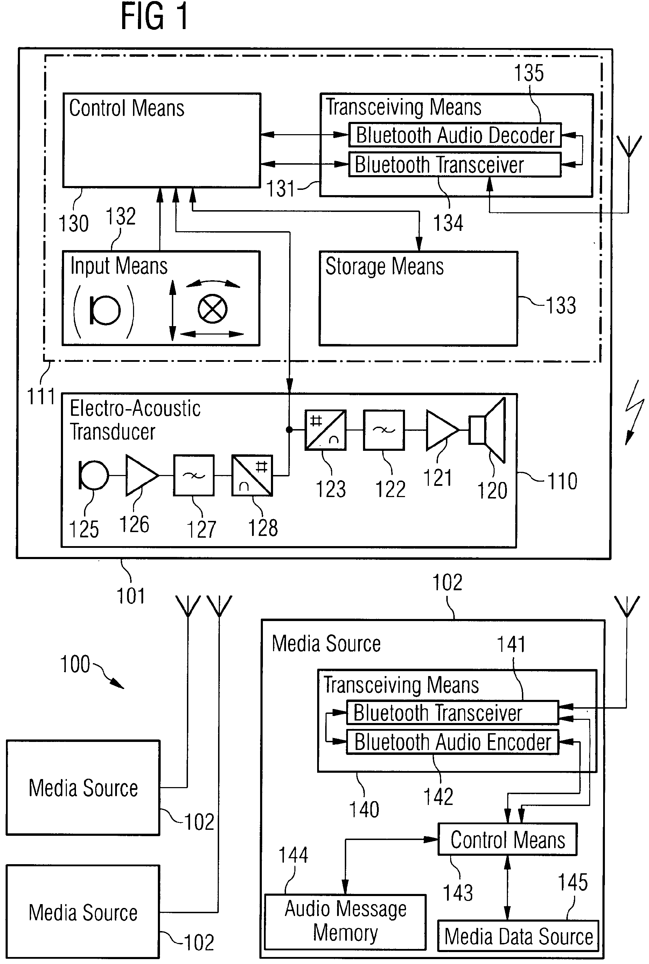

The wireless transmission system for audio data 100 shown in Fig. 1 comprises a portable electro-acoustic transducer set 101 like e.g. a headphone, a headset or the like for the reproduction of audio data to a user and/or recording of audio signals emitted from this user and transmitting this audio signals to one of the media sources 102 which are a further part of the wireless transmission system for audio data 100. The media sources 102 transmit when selected from the portable electro-acoustic transducer set 101 audio data for being reproduced to the user and receive audio and control data from the electro-acoustic transducer set. The electro-acoustic transducer 101 according to the present invention is basically set up of an audio unit 110 and a control and processing unit 111. The audio unit 110 comprises at least one sound generator like a speaker 120 in one earpad forming a monaural headset. For a binaural/stereo headset type, a speaker is provided within each of two earpads. It is to be noted, that more than one speaker can be provided in an earpad to improve the sound quality of the headset. One or more microphones may additionally provided so that sound produced from a user can be converted into an electrical signal processed in the control and processing unit 111 and then be transmitted as audio or control data to a media source 102.

In the following, the invention will be explained with reference to a portable electro-acoustic transducer set carried out as a headset with one or two earpads and a microphone. It is to be noted that the particular example has been chosen for demonstrating purposes only, and does not limit the scope of the present invention. Other embodiments of a portable electro-acoustic transducer set are i.e. a public address system or a stand-alone loudspeaker system for personal use.

A digital-to-analogue converter 123 converts audio data supplied by the control means 130 from a digital data format in an analogous signal. The filter 122 removes unwanted spectral components from the analogue audio signal before the signal is amplified by the amplifier 121 to an appropriate power for being finally converted into an acoustic audio signal by the speaker 120. Sound produced by a user, is received and converted into an analogue electrical signal by the microphone 125. The subsequent amplifier raises the signal level to a processable value and the filter 127 selects the bandwidth in which the analogue signal is then converted in the analogue-to-digital converter 128 to yield the digital audio data submitted to the control means 130. If the headset is carried out as a headphone, the microphone 125 together with the amplifier 126, the filter 127 and the analogue-to-digital converter is omitted.

The control and processing unit 111 comprises four main components, the control means 130, the transceiving means 131, the input means 132, and the storage means 133. The control means 130 controls the operation of the headset.

In a preferred embodiment of the present invention, the transceiving means 131 is based on the Bluetooth technology, providing a Bluetooth transceiver 134 and a Bluetooth audio decoder 135. The Bluetooth transceiver 134 receives signals from a media source 102 and separates the data contained in the received signal data stream into audio data and control data. The audio data supplied by the Bluetooth transceiver 134 are deciphered in the Bluetooth audio decoder 135 before being submitted to the control means 130 which transfers them to the audio unit 110 or the storage means 133. The storage means 133 stores control data, like e.g. the type and address of a contacted media source, and audio messages provided by that media sources. Audio data representing the media stream from a media source 102 are transferred to the audio unit 110 where they are converted for an acoustic reproduction to the user. Additionally as well as alternatively, a microphone, preferably the microphone from the audio unit 110 can be used as an input means.

The input means 132 provides facilities for a user to enter control information to the control means 130, wherein this information is being processed to control the operation of the headset. For a headset, the input means preferably provides a knob, whereby the knob delivers different signals depending on the way and the direction in which a force is applied to it. When a user speaks into the microphone, the control unit 130 may compare the thereby produced audio data with audio data information stored in the storage means 133, and on finding a match execute the command related to that specific audio message. In a further embodiment of the present invention, the control means 130 runs a speech recognition system to process voice commands, and on detecting one of the defined commands, the operation related to that particular command is executed by the control means. Audio data destined to be transmitted from the headset to a media source are encoded by the control means 130 before being handed to the Bluetooth transceiver 134 for transmission.

A media source 102 according to an example not forming part of the present invention comprises a transceiving means, which preferably consists of a Bluetooth transceiver 141 and a Bluetooth audio encoder 142, a control means 143, an audio message memory 144, and the media data source 145. The media data source 145 denominates an audio channel of a media device or a data storage medium, from which the audio data media stream to be acoustically reproduced to a user originates. Further, an audio data stream generated by a user and inputted via the microphone 125 of the headset 101 may be stored on that media data source. The media data source 145 then is a mass storage device which physical embodiment depends on the type of the media source. For a dictaphone i.e. the media data source 145 may be carried out as a tape, a hard disk or as an electronic memory device or the like. For a minidisk player, the media data source will have the physical embodiment of a minidisk. For a TV-set, the media data source is represented by its audio channel, and for a telephone the media data source represents the audio-in and audio-out channels of the device. The function and the workings of the transceiving means 140 defers from the transceiving means 131 of the headset 101 in that it comprises a Bluetooth audio encoder instead of a Bluetooth audio decoder for encoding the audio data originating from the media data source 135 for further transmission via the Bluetooth transceiver 141. Audio data as well as control data received by the Bluetooth transceiver 141 are forwarded to the control means 143. The control means 143 detects the character of the data, and if they show the character of an audio data stream, these data are forwarded to a media data source 145.

If the control means 143 detects control data, the control information underlying the data is analysed and executed. Thereby, a user is e.g. able to change the channels on a radio or TV-set, hop to a different song on a CD- or MD- player, enter a certain call number on a mobile or fixed network telephone, or even turn off the device. The media sources may be equipped with a kind of speech recognition system, which allows the control unit 143 to detect audio commands from the audio data stream received by the Bluetooth transceiver 141 and process them. An example is a speech controlled selection of a telephone number, where a spoken alias name like e.g. "Concetta" causes a telephone to call up a certain number from its register. Additionally, a media source 102 may comprise an audio message memory 144, for holding an audio message containing a voice sample characterising the type of the media source. The audio data underlying the voice sample, will be transferred from the control means 143 via the transceiving means 140 to the headset 101 when requested by the headset.

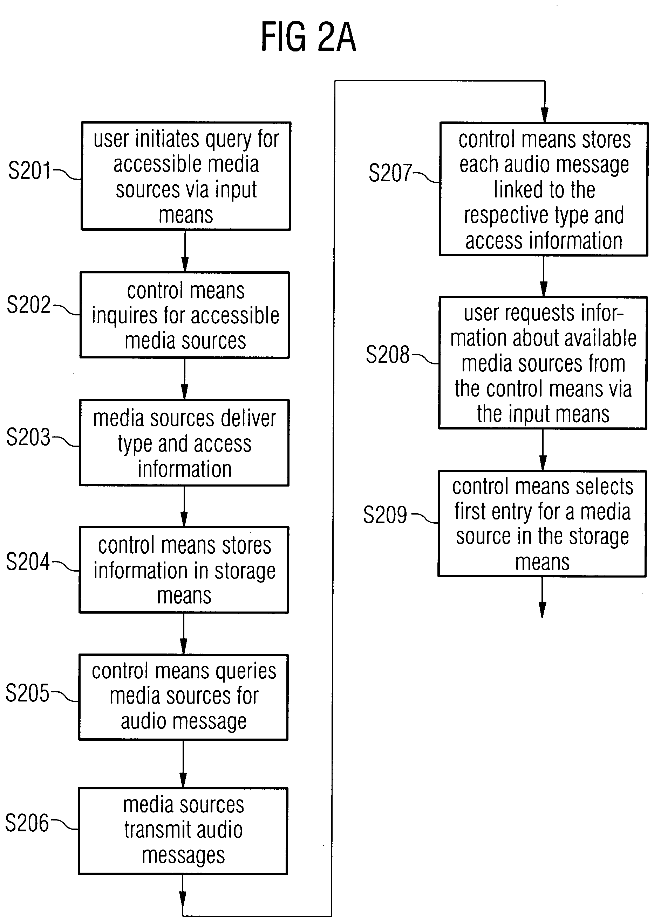

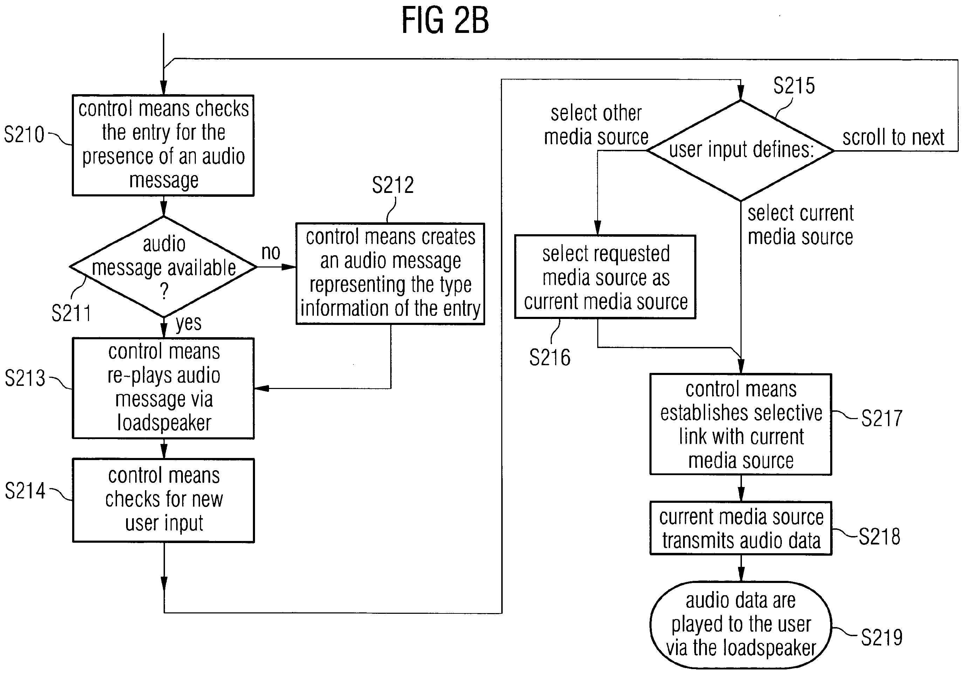

The flow chart of Fig. 2 is an example for a user initiated search for a first device providing audio data by media stream transmission. In step S201 the user initiates a query for accessible media sources via the input means 132. The control data received from the input means are interpreted by the control means 130 which, based on this starts an enquiry for accessible media sources in step S202. Because the media sources which are accessible by the headset 101 are not yet known to the control means 130, the enquiry is broadcasted, so that every media source within the reach of the headset 101 will receive the enquiry. Next, in step S203 each of the addressed media sources delivers information to the headset 101 specifying its type and address. The information form the various media sources are stored by the control means 130 in the storage means 133 in step S204. Next, the control means 130 queries the media sources 102 for an audio message if available in step S205. In step S206, the media sources respond to that query by transmitting the respective audio message to the headset 101. Each of the received audio messages is stored by the control means 130 into the storage means 133, whereby each of this audio messages is linked to the respective type and access information of the particular media source. Now, all information regarding the media sources 102 within the range of the headset 101 is held available in the storage means 133.

In step S208, a user requests information about the available media sources 102 from the control means 130 via the input means 132. In response to this request, in step S209 the control means selects the first entry for a media source 102 in the storage means 133. The control means 130 checks the entry in the storage means for the presence of an audio message in step S210, and on positive result in step S211 reproduces the audio message via the loudspeaker 120 to the user in step S213. For a negative decision in step S211, which means that there is no audio message available, the control means 130 creates an audio message on its own characterising the type of the media source for that entry. Those audio messages can be created directly by the program executed on the control means, or can be replayed audio messages prestored on the storage means 133. The audio messages can have an expressive meaningful character or can be of coded character like a certain sequence of beeps acting as a type indicator. The audio message from step S212 is then replayed to the user in step S213.

Following this step, a control means 130 checks for a new user input in step S214. In step S215, the user instructs the control means 130 on what to do next. If the user input defines to scroll to the next entry for a media source 102 in the storage means 133, the control means 130 continues with step S210. Assumed the media source of a current entry is the one the user prefers, the user will instruct in step S215 the control means 130 to select the current media source, and in a consequence of this, the control means 130 establishes a selective link with the current media source 102 in step S217. Following this, the selected media source transmits the audio data to the headset 101 in step S218 and finally these audio data are played to the user via the loudspeaker 120.

Assumed, in step S215 a user decides to select a media source 102 different from the currently selected entry in the storage means 133, this input requests a certain different media source, which will get the status of a current media source by the control means 130 in step S216. Like before, the control means then establishes a selective link with that media source in step S217 joined by the respective media source 102 transmitting audio data to the headset 101 in step S218 and finally acoustically reproducing these audio data to the user by the loudspeaker 120 in step S219.

It is to be noted, that only elements important for the understanding of the present invention are shown in Fig. 2 and further procedural steps like e.g. a constant scanning of the environment of the headset 101 for new media sources 102 or media sources which left the range of the headset have been omitted for the sake of clarity.

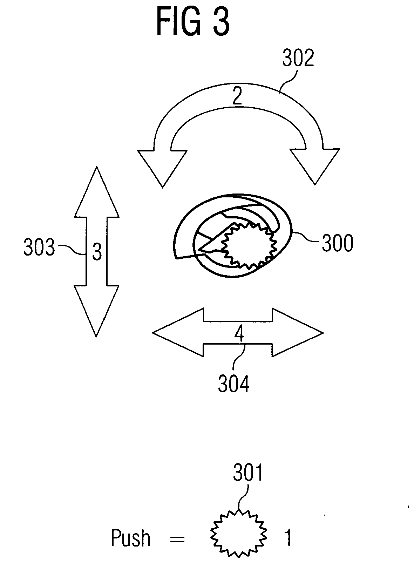

Fig. 3 shows the mechanical part of a electro-mechanical device for inputting control information to the control means 130. Especially for a headset, the input means must provide enough separate input channels, and must be usable very easily without looking at the device itself. The solution according to an example not forming part of the present invention is a knob, where the respective input channel is selected by exerting to the knob a force in a certain manner as indicated in Fig. 3. Pushing the knob activates the input channel designated with number "1". Exerting a rotational force to the knob around its axis, activates the input channel with the designated number "2". A vertical translational force activates the input channel designated with number "3", whereby a sign on the channel number distinguishes whether the knob has been pressed downwards or upwards. Exerting horizontal forces to the knob, activates the input channel designated with number "4", whereby the sign of the channel input reflects if the knob has been pressed to the left or the right side. The interpretation of the input channel signals by the control means 130 depends on the operation mode of the headset 101 and on the type of the media source selected for the audio data transmission. For a better understanding, two examples, one for a media source of a phone type, the other for a media source of a media player type are given below showing the operation controlled on the media source in relation to the input channel number activated with the control knob of Fig. 3.

**Phone**

| **Operation on device** | **Operation on control knob** |
|---|---|
| Call accept/hang up | 1 |
| Volume up/down | +2/-2 |

| **Media Player** | |
|---|---|
| **Operation on device** | **Operation on control knob** |
| Play/Stop | 1 |
| Volume up/down | +2/-2 |
| Track forward/backward | +4/-4 |

To enable also legacy audio devices not equipped with the features of a media source 102 according to an example not forming part of the present invention for being used with the headset 101, a separate device comprising the transceiving means 140, the control means 143, and the audio message memory 144 is proposed to be connected to the remote control access of that legacy audio device. This separate device thus forms a bridge between the legacy audio device and the wireless domain of the headset 101.

The search for media sources 102 by the headset 101 can be implemented on top of the Bluetooth mechanism, like e.g. a device discovery mechanism. In the search request, a headset 101 can set a filter to collect all the information about suitable devices. The device interaction mechanism allows, using UPnP (Universal Plug and Play) on top of XML (Extensible Mark-up Language) or similar technologies to retrieve sufficient information from the media sources to build a mapping between the input from the user interface to the device capabilities for controlling their functionality.

In addition to provide an interface to just one media source, the headset 101 according to the present invention can further provide a common control interface to a Bluetooth enabled mobile ad-hoc network of many media sources thereby transmitting control information to selected but different media sources. Especially in the case of a personal area network, the headset according to the present invention may be used as a common control interface to all audio sources provided by the networked devices like that of a media player providing light music, a phone for conversation, and PDA (personal digital assistant) signalling scheduled events.

## Claims

1. A portable electro-acoustic transducer set (101) comprising:
- retrieving means (130, 131) for retrieving information from a plurality of media sources,
- storage means (133) for storing information retrieved from said plurality of media sources,
- transducer means (110) for acoustically reproducing information retrieved from said plurality of media sources, and
- input means (132) for selecting a media source from said plurality of media sources,
wherein said retrieving means (130, 131) is adapted to establish a bi-directional transmission with any of the plurality of media sources,
wherein
said input means (132) comprises a microphone,
said retrieving means (130, 131) is adapted
- to broadcast an enquiry for accessible media sources (102) and to receive, from each accessible media source, control data identifying its type and its address in response to said enquiry,
- to query the accessible media sources for an audio message characterizing the type of the respective media sources and to either receive an audio message from the respective media sources or to create an audio message for the respective media sources if no audio message is received,
said transducer means (110) is adapted to replay audio messages to a user allowing said user to select a media source, and
said retrieving means (130, 131) is adapted to establish a bi-directional transmission link with a selected media source (102) based on information retrieved from said media source (102).

2. A portable electro-acoustic transducer set according to claim 1,
**characterized in that** said input means (132) comprises a speech recognition system for processing voice commands.

3. A wireless transmission system (100) for audio data comprising:
a portable electro-acoustic transducer set (101) according to claim 1 adapted to transmit and to receive control data and audio data over an air interface, and
a plurality of media sources (102) each adapted to transmit and to receive control data and audio data to and from said portable electro-acoustic transducer set,
wherein each accessible media source (102) is adapted to transmit control data identifying its type and its address to said portable electro-acoustic transducer set (101) in response to said enquiry and to transmit an audio message in response to said query from the portable electro-acoustic transducer set (101).

4. A wireless transmission system according to claim 3,
**characterized in that** said audio message is transmitted to said portable electro-acoustic transducer set (101) following a request from said portable electro-acoustic transducer set (101).

5. A wireless transmission system according to claim 3 or 4,
**characterized in that** the transmission of control and audio data is implemented according to the Bluetooth standard.

## Patentansprüche

1. Tragbares elektroakustisches Wandlersystem (101), umfassend:
- ein Abrufmittel (130, 131) zum Abrufen von Informationen aus einer Vielzahl von Medienquellen,
- ein Speichermittel (133) zum Speichern von Informationen, die aus der Vielzahl von Medienquellen abgerufen werden,
- ein Wandlermittel (110) zur akustischen Wiedergabe von Informationen, die aus der Vielzahl von Medienquellen abgerufen werden, und
- ein Eingabemittel (132) zum Auswählen einer Medienquelle aus der Vielzahl von Medienquellen,
wobei das Abrufmittel (130, 131) dazu eingerichtet ist, eine bidirektionale Übertragung mit einer der Vielzahl von Medienquellen herzustellen,
wobei
das Eingabemittel (132) ein Mikrofon umfasst,
das Abrufmittel (130, 131) dazu angepasst ist,
- eine Anfrage nach zugänglichen Medienquellen (102) zu senden und von jeder zugänglichen Medienquelle Steuerdaten zu erhalten, die ihre Art und ihre Adresse als Reaktion auf die Anfrage identifizieren,
- die zugänglichen Medienquellen nach einer die Art der jeweiligen Medienquellen kennzeichnenden Audionachricht abzufragen und entweder eine Audionachricht von den jeweiligen Medienquellen zu empfangen oder eine Audionachricht für die jeweiligen Medienquellen zu erstellen, falls keine Audionachricht empfangen wird,
das Wandlermittel (110) dazu eingerichtet ist, Audionachrichten an einen Benutzer wiederzugeben, die es dem Benutzer ermöglichen, eine Medienquelle auszuwählen, und
das Abrufmittel (130, 131) dazu eingerichtet ist, eine bidirektionale Übertragungsverbindung mit einer ausgewählten Medienquelle (102) basierend auf von der Medienquelle (102) abgerufenen Informationen herzustellen.

2. Tragbares elektroakustisches Wandlersystem nach Anspruch 1,
**dadurch gekennzeichnet, dass** das Eingabemittel (132) ein Spracherkennungssystem zur Verarbeitung von Sprachbefehlen umfasst.

3. Drahtloses Übertragungssystem (100) für Audiodaten, umfassend:
ein tragbares elektroakustisches Wandlersystem (101) nach Anspruch 1, das dazu eingerichtet ist, Steuerdaten und Audiodaten über eine Luftschnittstelle zu senden und zu empfangen, und
eine Vielzahl von Medienquellen (102), die jeweils zum Senden und Empfangen von Steuerdaten und Audiodaten an das und von dem tragbaren elektroakustischen Wandlersystem geeignet sind,
wobei jede zugängliche Medienquelle (102) dazu eingerichtet ist, Steuerdaten, die ihre Art und ihre Adresse identifizieren, als Reaktion auf die Anfrage an das tragbare elektroakustische Wandlersystem (101) zu übertragen und eine Audionachricht als Reaktion auf die Anfrage von dem tragbaren elektroakustischen Wandlersystem (101) zu übertragen.

4. Drahtloses Übertragungssystem nach Anspruch 3,
**dadurch gekennzeichnet, dass** die Audionachricht an das tragbare elektroakustische Wandlersystem (101) nach einer Anforderung von dem tragbaren elektroakustischen Wandlersystem (101) übertragen wird.

5. Drahtloses Übertragungssystem nach Anspruch 3 oder 4,
**dadurch gekennzeichnet, dass** die Übertragung von Steuer- und Audiodaten gemäß der Bluetooth-Norm implementiert ist.

## Revendications

1. Ensemble transducteur électroacoustique portable (101) comprenant :
- des moyens de récupération (130, 131) pour récupérer des informations à partir d'une pluralité de sources de média,
- des moyens de stockage (133) pour stocker des informations récupérées à partir de ladite pluralité de sources de média,
- des moyens transducteurs (110) pour reproduire acoustiquement des informations récupérées à partir de ladite pluralité de sources de média, et
- des moyens d'entrée (132) pour sélectionner une source de média parmi ladite pluralité de sources de média,
dans lequel lesdits moyens de récupération (130, 131) sont adaptés pour établir une transmission bidirectionnelle avec n'importe laquelle de la pluralité de sources de média,
dans lequel
lesdits moyens d'entrée (132) comprennent un microphone,
lesdits moyens de récupération (130, 131) sont adaptés
- pour diffuser une requête pour des sources de média accessibles (102) et pour recevoir, depuis chaque source de média accessible, des données de contrôle identifiant son type et son adresse en réponse à ladite requête,
- pour interroger les sources de média accessibles pour un message audio caractérisant le type des sources de média respectives, et soit pour recevoir un message audio depuis les sources de média respectives, soit pour créer un message audio pour les sources de média respectives si aucun message audio n'est reçu,
lesdits moyens transducteurs (110) sont adaptés pour rejouer des messages audio à un utilisateur permettant audit utilisateur de sélectionner une source de média, et
lesdits moyens de récupération (130, 131) sont adaptés pour établir une liaison de transmission bidirectionnelle avec une source de média sélectionnée (102) sur la base d'informations récupérées à partir de ladite source de média (102).

2. Ensemble transducteur électroacoustique portable selon la revendication 1,
**caractérisé en ce que** lesdits moyens d'entrée (132) comprennent un système de reconnaissance vocale pour traiter des commandes vocales.

3. Système de transmission sans fil (100) pour données audio comprenant :
un ensemble transducteur électroacoustique portable (101) selon la revendication 1 adapté pour transmettre et pour recevoir des données de contrôle et des données audio sur une interface radio, et
une pluralité de sources de média (102), chacune adaptée pour transmettre et pour recevoir des données de contrôle et des données audio audit et depuis ledit ensemble transducteur électroacoustique portable,
dans lequel chaque source de média accessible (102) est adaptée pour transmettre des données de contrôle identifiant son type et son adresse audit ensemble transducteur électroacoustique portable (101) en réponse à ladite requête et pour transmettre un message audio en réponse à ladite interrogation provenant de l'ensemble transducteur électroacoustique portable (101).

4. Système de transmission sans fil selon la revendication 3,
**caractérisé en ce que** ledit message audio est transmis audit ensemble transducteur électroacoustique portable (101) après une requête provenant dudit ensemble transducteur électroacoustique portable (101).

5. Système de transmission sans fil selon la revendication 3 ou 4,
**caractérisé en ce que** la transmission de données de contrôle et audio est mise en œuvre selon la norme Bluetooth.
